# EUROPEAN PATENT APPLICATION

(11) **EP 4 797 809 A1**
(43) Date of publication of application: **26.08.2026**
(21) Application number: 24886017.3
(22) Date of filing: 11.09.2024
(51) Int. Cl.: H04W 52/02, H04W 68/02, H04W 24/08, H04W 76/27

(54) **METHOD AND APPARATUS FOR OPERATION FOR UTILIZING LOW-POWER WAKE-UP RADIO IN MOBILE COMMUNICATION SYSTEM**

(30) Priority: 02.11.2023 KR 20230150133
(71) Applicant: Samsung Electronics Co., Ltd., Suwon-si, Gyeonggi-do 16677 (KR)
(72) Inventor: JUNG, Byounghoon, Suwon-si Gyeonggi-do 16677 (KR); KIM, Daegyun, Suwon-si Gyeonggi-do 16677 (KR); BAEK, Sangkyu, Suwon-si Gyeonggi-do 16677 (KR); JUNG, Sangyeob, Suwon-si Gyeonggi-do 16677 (KR)
(74) Representative: Gulde & Partner
(86) International application number: PCT/KR2024/013750
(87) International publication number: WO 2025/095339

(57) **Abstract**

The present disclosure relates to a method performed by a terminal in a wireless communication system, and the method may comprise the steps of: receiving, from a base station, configuration information related to a condition for starting radio resource management (RRM) measurement relaxation, wherein the configuration includes a first condition for starting main radio (MR) measurement relaxation and a second condition for starting low-power radio (LR) measurement relaxation; and receiving, from the base station, each of a reference signal related to MR-based measurement and a reference signal related to LR-based measurement, wherein the MR measurement relaxation is started when the first condition is satisfied, and the first condition includes a condition in which a measurement result based on the reference signal related to the LR-based measurement is used, or includes the condition in which the measurement result based on the reference signal related to the LR-based measurement is used and a condition in which a measurement result based on the reference signal related to the MR-based measurement is used.

## Description

### [Technical Field]

The disclosure relates to operations of a terminal and a base station in a wireless communication system and, more particularly, to a signal transmission/reception method and apparatus for supporting idle- and inactive-mode operations of a terminal in an environment where a base station and the terminal are able to transmit a wake-up signal (hereinafter, a WUS) to wake up the terminal or a cell in a sleep mode when the terminal, the base station, or a transmitting/receiving node of the cell enters the sleep mode in a next-generation network energy saving (NES) system supporting a power saving technology.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz (THz) bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 preprocessing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

Meanwhile, methods and devices for supporting mobility using terminal location information have been proposed for non-terrestrial network systems; for terminals capable of utilizing these, there has been a growing need for mobility support methods that utilize the relative positioning of terminals and the network, as opposed to the conventional signal strength-based approach.

### [Disclosure of Invention]

### [Technical Problem]

The disclosure is to provide a signal transmission method and a signal transmission device for supporting idle- and inactive-mode operations of a UE by using a wake-up radio capable of transmitting and receiving a low-power wake-up signal when a UE includes the wake-up radio to support a power saving-mode operation of a network in a wireless communication system.

### [Solution to Problem]

A UE according to an embodiment of the disclosure may include an operation of receiving a reference signal through a wake-up radio (WUR) and a new radio (NR) from neighboring cells and base stations according to a certain condition, receiving a signal including a trigger condition from a base station, and determining whether a measurement value of the reference signal corresponds to the condition, an operation of determining the trigger condition, and an operation of operating one radio access technology (RAT) in a low-power mode.

A method performed by a terminal in a wireless communication system may include: receiving configuration information related to a condition for starting radio resource management (RRM) measurement relaxation from a base station, the configuration including a first condition for starting main radio (MR) measurement relaxation and a second condition for starting low power radio (LR) measurement relaxation; and receiving a reference signal related to MR-based measurement and a reference signal related to LR-based measurement from the base station, wherein the MR measurement relaxation may be started when the first condition is satisfied, and the first condition may include a condition in which a measurement result based on the reference signal related to the LR-based measurement is used, or the condition in which the measurement result based on the reference signal related to the LR-based measurement is used and a condition in which a measurement result based on the reference signal related to the MR-based measurement is used.

A method performed by a base station in a wireless communication system may include: transmitting configuration information related to a condition for starting radio resource management (RRM) measurement relaxation to a terminal, the configuration including a first condition for starting main radio (MR) measurement relaxation and a second condition for starting low power radio (LR) measurement relaxation; and transmitting a reference signal related to MR-based measurement and a reference signal related to LR-based measurement to the terminal, wherein the MR measurement relaxation may be started when the first condition is satisfied, and the first condition may include a condition in which a measurement result based on the reference signal related to the LR-based measurement is used, or the condition in which the measurement result based on the reference signal related to the LR-based measurement is used and a condition in which a measurement result based on the reference signal related to the MR-based measurement is used.

A terminal in a wireless communication system may include: a transceiver; and a controller connected to the transceiver, wherein the controller may be configured to: receive configuration information related to a condition for starting radio resource management (RRM) measurement relaxation from a base station, the configuration including a first condition for starting main radio (MR) measurement relaxation and a second condition for starting low power radio (LR) measurement relaxation; and receive a reference signal related to MR-based measurement and a reference signal related to LR-based measurement from the base station, the MR measurement relaxation may be started when the first condition is satisfied, and the first condition may include a condition in which a measurement result based on the reference signal related to the LR-based measurement is used, or the condition in which the measurement result based on the reference signal related to the LR-based measurement is used and a condition in which a measurement result based on the reference signal related to the MR-based measurement is used.

A base station in a wireless communication system may include: a transceiver; and a controller connected to the transceiver, wherein the controller may be configured to: transmit configuration information related to a condition for starting radio resource management (RRM) measurement relaxation to a terminal, the configuration including a first condition for starting main radio (MR) measurement relaxation and a second condition for starting low power radio (LR) measurement relaxation; and transmit a reference signal related to MR-based measurement and a reference signal related to LR-based measurement to the terminal, the MR measurement relaxation may be started when the first condition is satisfied, and the first condition may include a condition in which a measurement result based on the reference signal related to the LR-based measurement is used, or the condition in which the measurement result based on the reference signal related to the LR-based measurement is used and a condition in which a measurement result based on the reference signal related to the MR-based measurement is used.

The technical subjects pursued in various embodiments of the disclosure may not be limited to the above-mentioned technical subjects, and other technical subjects which are not mentioned herein may be clearly understood from the following description by those skilled in the art to which the disclosure pertains.

### [Advantageous Effects of Invention]

According to an embodiment of the disclosure, when one or more RATs are used in a wireless communication system, power consumption of a UE may be further reduced by operating one RAT in a low-power mode.

Advantageous effects obtainable from the disclosure may not be limited to the above-mentioned effects, and other effects which are not mentioned herein may be clearly understood from the following description by those skilled in the art to which the disclosure pertains.

### [Brief Description of Drawings]

FIG. 1 is a diagram illustrating a structure of a next-generation mobile communication system that supports network energy saving according to an embodiment of the disclosure.
FIG. 2 is a diagram illustrating a concept of a NES mode of a base station or a cell according to an embodiment of the disclosure.
FIG. 3 is a diagram illustrating an example of a WUS transmission procedure of a UE according to an embodiment of the disclosure.
FIG. 4 is a diagram illustrating an example of a procedure in which a base station transmits a WUS to a UE according to an embodiment of the disclosure.
FIG. 5 is a diagram illustrating an example in which a UE is configured with a condition for entering a deep-sleep mode and performs a deep-sleep operation according to the condition according to an embodiment of the disclosure.
FIG. 6 is a diagram illustrating an example in which a UE is configured to with a condition for exiting from a deep-sleep mode, terminates a deep-sleep operation according to the condition, and performs an operation of turning on an MR back to an always-on state according to an embodiment of the disclosure.
FIG. 7 is a diagram illustrating an example in which a UE including an LP-WUP performs signal transmission and reception and RRM measurement relaxation to save power by relaxing RRM measurement of an MR or the LP-WUP when operating in an idle/inactive mode according to an embodiment of the disclosure.
FIG. 8 is a diagram illustrating an example in which a UE including an LP-WUR is configured with an LP-WUR tracking area or LP tracking area (LP-TA), allowing the UE to move while maintaining a deep-sleep mode during an idle/inactive-mode operation, and performs an operation based thereon according to an embodiment of the disclosure.
FIG. 9 is a diagram illustrating an example of a method in which a UE including an LP-WUR provides information to a base station before or after transitioning to a deep-sleep mode according to an embodiment of the disclosure.
FIG. 10 illustrates a structure of a base station according to an embodiment of the disclosure.
FIG. 11 illustrates a structure of a UE according to an embodiment of the disclosure.

### [Mode for the Invention]

Hereinafter, the operation principle of the disclosure will be described in detail in conjunction with the accompanying drawings. In describing the disclosure below, a detailed description of known functions or configurations will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.

In the following description, a base station is an entity that allocates resources to terminals, and may be at least one of a gNode B, an eNode B, a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. In the disclosure, a "downlink (DL)" refers to a radio link via which a base station transmits a signal to a terminal, and an "uplink (UL)" refers to a radio link via which a terminal transmits a signal to a base station. Furthermore, in the following description, LTE or LTE-A systems may be described by way of example, but the embodiments of the disclosure may also be applied to other communication systems having similar technical backgrounds or channel types. Examples of such communication systems may include the 5th generation mobile communication technologies (5G, new radio, and NR) developed beyond LTE-A, and in the following description, the "5G" may be the concept that covers the exiting LTE, LTE-A, and other similar services. In addition, based on determinations by those skilled in the art, the disclosure may also be applied to other communication systems through some modifications without significantly departing from the scope of the disclosure. Herein, it will be understood that each block of the flowchart illustrations, and combinations of blocks in the flowchart illustrations, can be implemented by computer program instructions.

These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved. As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

In the following description of the disclosure, terms and names defined in 5GS and NR standards, which are the standards specified by the 3rd generation partnership project (3GPP) group, will be used for the sake of descriptive convenience. However, the disclosure is not limited by these terms and names, and may be applied in the same way to systems that conform other standards. For example, the disclosure may be applied to the 3GPP 5GS/NR (5th generation mobile communication standards).

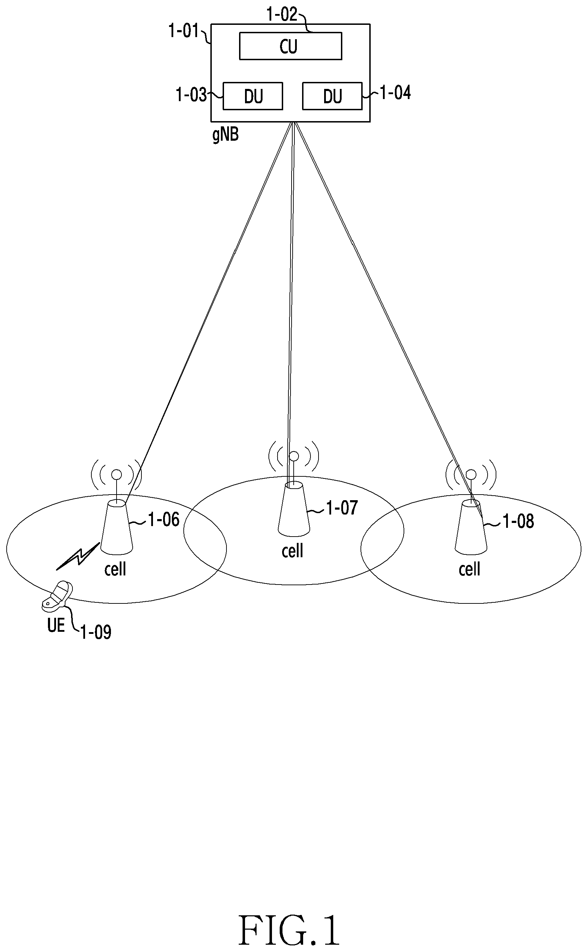

FIG. 1 is a diagram illustrating a structure of a next-generation mobile communication system that supports network energy saving according to an embodiment of the disclosure.

Referring to FIG. 1, the next-generation mobile communication system that supports network energy saving may include a next-generation base station (g Node B, hereinafter, gNB, Node B, or base station) 1-01, cells 1-06, 1-07, and 1-08, and a user equipment (UE) 1-09. The gNB may include a central unit (CU) 1-02 and one or more distributed units (DUs) 1-03 and 1-04.

One CU may support one or more DUs, and one DU 1-03 or 1-04 may support one cell 1-06, 1-07, or 1-08, or one or more cells 1-06, 1-07, and 1-08.

The UE 1-09 may connect to an external network through a cell via the gNB.

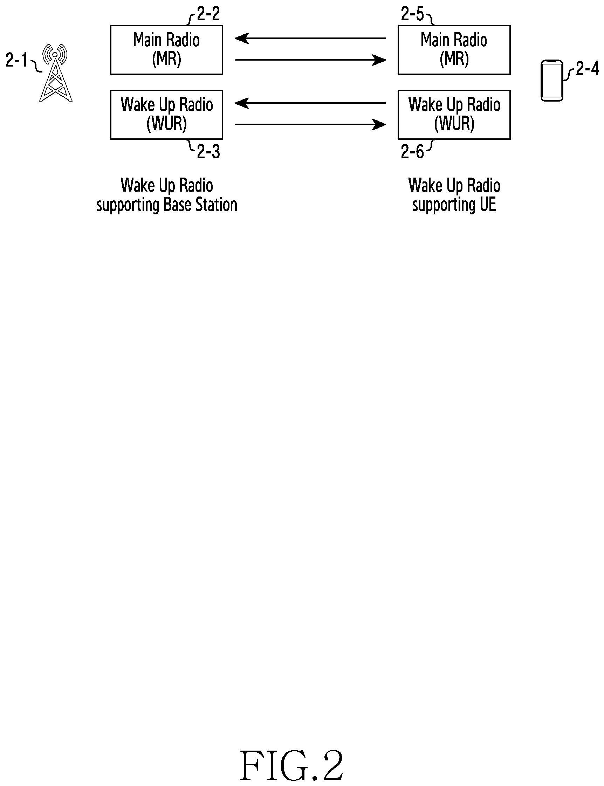

FIG. 2 is a diagram illustrating a concept of a NES mode of a base station or a cell according to an embodiment of the disclosure.

Referring to FIG. 2, a base station supporting a wake-up radio (WUR) function may be referred to as a WUR BS 2-1, and a UE supporting a wake-up radio (WUR) function may be referred to as a WUR UE 2-4. The WUR BS 2-1 may include a main radio (MR) 2-2 for performing wireless communication with the WUR UE and a WUR 2-3 for performing a wake-up operation, and the WUR UE 2-4 may include a main radio (MR) 2-5 for performing wireless communication with the WUR BS 2-1, and a WUR 2-6 for performing a wake-up operation. The MR 2-2 of the WUR BS 2-1 may perform wireless communication with the MR 2-5 of the WUR UE 2-4 or other UEs, and the WUR 2-3 of the WUR BS 2-1 may perform wireless communication with the WUR 2-6 of the WUR UE 2-4.

According to an embodiment of the disclosure, the WUR may be a module that is logically separated but physically one, rather than being two physically different modules, as part of the MR.

According to an embodiment of the disclosure, the WUR may be part of the MR both physically and logically.

Hereinafter, in the disclosure, a WUR may be referred to as an LP-WUR by adding "low power," and may also be referred to as a low-power radio (LPR) or an LR.

The WUR BS and the WUR UE may be in (or may have) the following operation configuration states.
1. Full-on state in which both the MR and the WUR are turned on
2. MR-on state in which only the MR is turned on and the WUR is turned off
3. Deep-sleep state in which the MR is (entirely or partly) turned off and only the WUR is turned on
4. Full-off state in which both the MR and the WUR (entirely or partly) are turned off
5. Light-sleep state in which the MR is turned on but saves power by not transmitting certain signals, such as an SSB, an SIB, and a broadcast signal

The deep-sleep mode of the UE described above in 3 may be defined as one of the following definitions.
- Mode in which the UE turns off all or part of MR-related circuits and operations, disabling any wireless communication through the MR and performing cellular wireless communication through the LP-WUR.
- Mode in which the UE typically turns off all or part of MR-related circuits and operations, disabling wireless communication through the MR and transmitting or receiving a message only through the LP-WUR, but periodically wakes up to perform reception through the MR on a certain resource defined by a network. The certain resource may be, for example, a resource, such as a periodic paging occasion for transmitting or receiving paging.

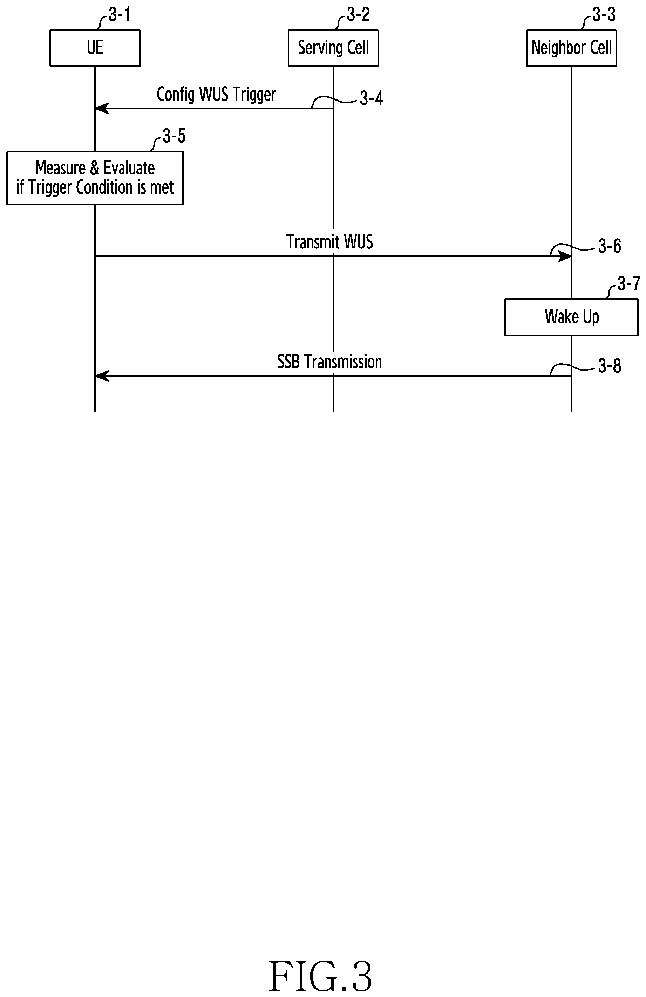

FIG. 3 is a diagram illustrating an example of a WUS transmission procedure of a UE according to an embodiment of the disclosure.

Referring to FIG. 3, a UE 3-1 may receive a signal 3-4 from a serving cell base station 3-2 to which the UE 3-1 is connected, and the signal 3-4 may include configuration information including a condition for the UE to transmit a WUS.

According to an embodiment of the disclosure, the UE 3-1 may be configured by a serving cell, through signal 3-4, with a condition for WUS transmission utilizing a measurement value for the serving cell 3-2 or a neighboring cell 3-3. The serving cell 3-2 may configure various conditions for the UE 3-1 to derive a reference signal and a cell measurement value through measurement of a reference signal (e.g., an SSB or CSI-RS) and to compare the derived measurement value with a threshold value configured by the serving cell, thereby configuring a trigger for the UE to transmit a WUS, based on a measurement result.

In order for the UE to successfully transmit a WUS to neighboring cells, the serving cell (or the base station to which the cell belongs) needs to provide the UE with information about a resource that enables the neighboring cells to receive the WUS.

The serving cell identifies a resource (time or frequency) and a method (periodic or aperiodic) through which a plurality of neighboring cells with overlapping coverage within coverage is able to receive a WUS, and receives identified information regarding the plurality of neighboring cells shared by the cells.

The base station of the serving cell may transmit a signal including at least one of the following pieces of WUS resource information to the UE.
- Resource information, such as a time/frequency for the UE to transmit a WUS
   ▪ For example, resource information including information about a subframe/radio frame/slot time with a predetermined rule periodically repeated
   ▪ For example, resource information including information about WUS transmission time duration expressed as an absolute time, the number of slots, the number of frames, or the like
   ▪ For example, resource information including information about a time interval from reception time of the signal 3-4 to a start time when the UE is able to transmit a WUS, which indicates the start time when the UE is able to transmit the WUS after a certain time from receiving the signal 3-4, and is expressed as an absolute time, the number of slots, the number of frames, a timer, or the like
   ▪ For example, resource information including information about an ID of a frequency band indicating (representing) a frequency band
   ▪ For example, resource information including information about an ID of a resource block indicating (or representing) a start frequency, a bandwidth indicating (or representing) a frequency bandwidth, and the number of unit resource block frequency bandwidths
   ▪ For example, resource information including information about an ID of a reference frequency for indicating (representing) a start frequency offset from the reference frequency, a bandwidth indicating (representing) a difference between the reference frequency and the start frequency, and the number of unit resource block frequency bandwidths
- Sequence ID or list of sequence IDs for specifying a sequence transmittable via a WUS (or sequence available for WUS transmission)
- Information ID (or list of information IDs) indicating (representing) a type of information transmittable via a WUS (or information transmittable using a WUS)
- Condition ID or list of condition IDs indicating a condition type indicating a condition for transmitting a WUS (or a condition for which a WUS is transmittable)
- Indication indicating that a UE may (is able to) transmit a WUS when the base station is operating in the deep-sleep mode

At least one of the foregoing pieces of WUS resource information may be information of the base station transmitting the signal 3-4.

At least one of the foregoing pieces of WUS resource information may be information of a neighboring base station (or cell) of the base station transmitting the signal 3-4, in which case a base station ID, a cell ID, a base station ID list, or a cell ID list may be included in the information of the neighboring base station (or cell).

At least one of the above-described WUS resource information may be applied to one or more base stations or cells, in which case a list of an ID of a base station or a list of an ID of a cell that is able to use WUS transmission information (WUS resource information) may be included in the WUS transmission information.

At least one of the foregoing pieces of WUS resource information may be applied equally to all neighboring base stations or cells (cell common information), in which case an indicator (e.g., a 1-bit indication) indicating corresponding information to the UE may be included.

At least one of the foregoing pieces of WUS resource information may have a structure and format similar or identical to those of physical random access channel (PRACH) configuration information.

A WUS transmitted by the UE may include at least one of the following pieces of information.
- Sequence transmitted by the UE via the WUS
- ID of the UE transmitting the WUS
- Part of the ID of the UE transmitting the WUS
- Purpose ID indicating a purpose of the WUS transmitted by the UE
   ▪ For example, the UE may transmit the WUS to request SSB transmission, and may also transmit a purpose ID indicating (representing) that WUS transmission is for requesting SSB transmission.
   ▪ For example, the UE may transmit the WUS for a handover, and may transmit a purpose ID indicating that WUS transmission is for a handover.

The purpose ID that may be included in the WUS transmitted by the UE may be specified in a standard and known in advance by both the UE and the base stations.

The purpose ID that may be included in the WUS transmitted by the UE may be configured by a function of a core network, for example, an AMF, for the base station and the UE.

The purpose ID that may be included in the WUS transmitted by the UE may be configured by the base station for the UE. The purpose ID may be included in a broadcast signal (e.g., a master information block (MIB) included in an SSB, or a system information block (SIB)) transmitted by the base station to the UE. The purpose ID may be included and transmitted in a unicast signal (e.g., an RRC signal, a MAC signal, or a PHY signal) that the base station transmits to a specified UE.

Information configurable by an AMF or the base station for the UE may include an indicator for identifying a cell currently operating in the deep-sleep mode, for example, an indicator in a form of a 1-bit indicator included in each cell information.

The information configurable by the AMF or the base station for the UE may include an indicator for identifying a cell where an MR is currently on, for example, an indicator in a form of a 1-bit type included in each cell information.

The information configurable by the AMF or the base station for the UE may implicitly indicate that all cells included in the information are operating in the deep-sleep mode. That is, the base station may configure and transmit the information only for cells currently operating in the deep-sleep mode.

The information configurable by the AMF or the base station for the UE may be included in a broadcast signal (e.g., a master information block (MIB) included in an SSB, or a system information block (SIB)) transmitted by the base station to the UE.

The information configurable by the AMF or the base station for the UE may be included in and transmitted via a unicast signal (e.g., an RRC signal, a MAC signal, or a PHY signal) that the base station transmits to a specified UE.

The resource information for WUS transmission of the UE may be provided in advance from the base station to the UE through a predetermined signal (e.g., a broadcast signal or an RRC signal) before a transmission time of a trigger configuration signal for WUS transmission. Alternatively, the resource information for WUS transmission may be included together with the trigger configuration signal for WUS transmission in a single signal (e.g., an RRC signal).

According to an embodiment of the disclosure, the UE 3-1 may determine whether a WUS trigger condition configured through the WUS configuration signal 3-3 transmitted by the base station 3-2 is satisfied, based on reference signals transmitted by the base stations including the serving cell and the neighboring cells (e.g., a sync signal block (SSB) transmitted by the MR or any synchronization signal, such as a low-power synchronization signal (LP-SS), transmitted by an LP-WUR) (3-5). Specifically, the UE may receive the reference signals transmitted by the base stations including the serving cell and the neighboring cells, measure a representative value of each cell through the received reference signals, and compare the measured representative values with the configured WUS trigger condition, thereby determining whether WUS transmission is triggered (3-5).

According to an embodiment of the disclosure, when determining that the WUS trigger condition is satisfied, the UE 3-1 may transmit an LP-WUS to the neighboring cells through a configured WUS resource (3-6).

According to an embodiment of the disclosure, when a neighboring cell having received the WUS is operating in a sleep mode, the neighboring cell may wake up from the sleep mode by performing a determination based on at least one of the following conditions (3-7). Here, when a base station of the neighboring cell is in the deep-sleep mode, the base station may wake up by waking up a main radio (MR). When the base station of the neighboring cell is in the light-sleep mode, the base station may start SSB/SIB transmission.
- Upon receiving the WUS, the neighboring cell unconditionally wakes up.
- When reception power of the WUS is equal to or greater than a certain threshold value, the neighboring cell wakes up.
- When the reception power of the WUS is equal to or greater than a specific threshold value configured by a function of the core network, for example, the AMF, the neighboring cell wakes up.
- When the reception power of the WUS is equal to or greater than a specific threshold value provided by the neighboring cell, the neighboring cell wakes up.

The MR of the awoken neighboring cell may transmit a synchronization signal block (SSB) to neighboring UEs (3-8).

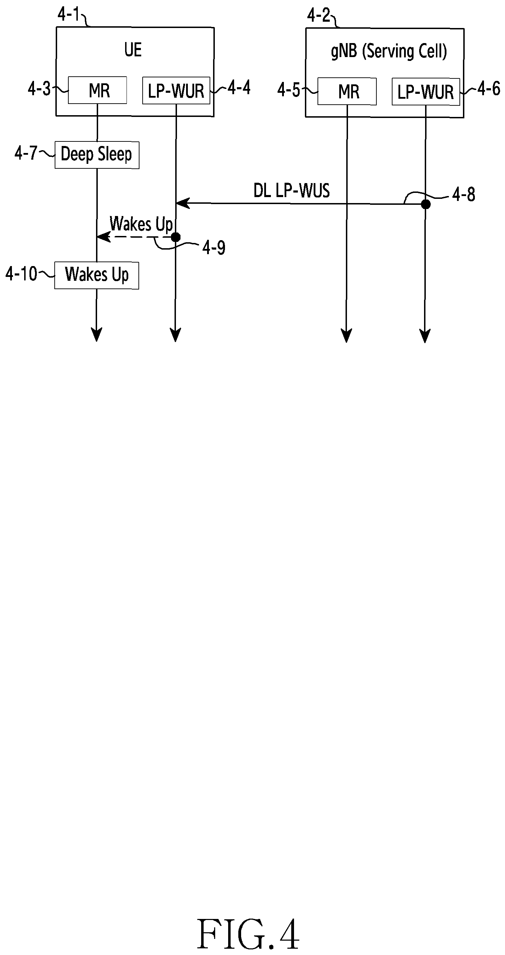

FIG. 4 is a diagram illustrating an example of a procedure in which a base station transmits a WUS to a UE according to an embodiment of the disclosure.

Referring to FIG. 4, a UE 4-1 and a serving cell 4-2 each include an MR 4-3 and 4-5 and an LP-WUR 4-4 and 4-6 as components. The serving cell 4-2 may transmit a WUS to the UE operating in the deep-sleep mode (4-8), enabling the UE to exit from the deep-sleep mode (4-9) and to wake up an MR (4-10).

The LP-WUS may also be used as a downlink signal for triggering at least one of the following operations.
1. When the UE in an idle/inactive mode receives the downlink LP-WUS, the downlink LP-WUS may be used as a signal for triggering the UE to receive paging from a network in a subsequent paging occasion.
   A. To use the downlink LP-WUS as above in 1, the base station may transmit in advance, to the UE through the MR or the LP-WUR, LP-WUS configuration information including an indicator indicating that the UE is to perform an operation illustrated above in 1 when receiving the LP-WUS.
2. When the UE in the idle/inactive mode receives the downlink LP-WUS, the downlink LP-WUS signal may be used as a signal for triggering the UE to receive a paging early indication (PEI) signal indicating that there is paging from the network in a subsequent PEI signal reception period.
   A. To use the downlink LP-WUS as above in 2, the base station may transmit in advance, to the UE through the MR or the LP-WUR, LP-WUS configuration information including an indicator indicating that the UE is to perform an operation illustrated above in 2 when receiving the LP-WUS.

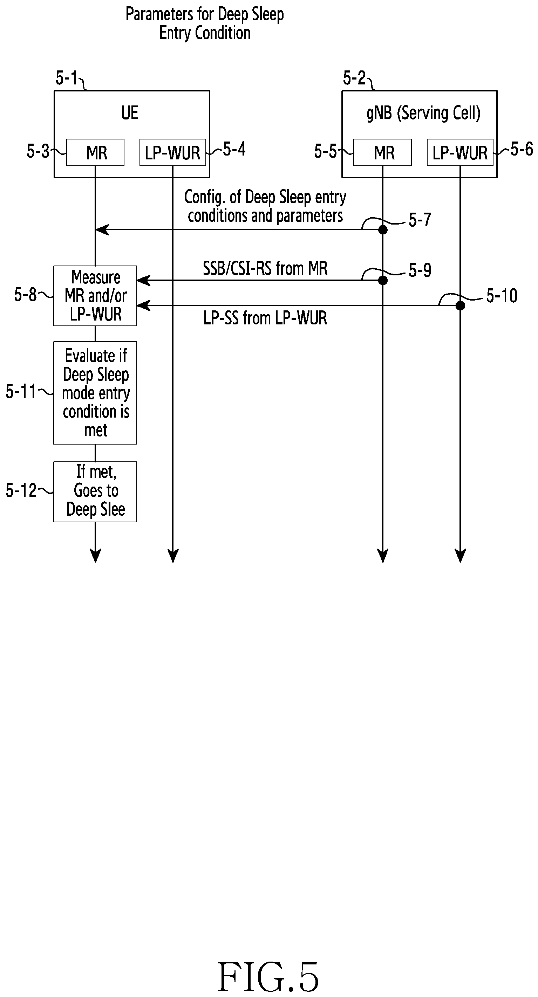

FIG. 5 is a diagram illustrating an example in which a UE is configured with a condition for entering a deep-sleep mode and performs a deep-sleep operation according to the condition according to an embodiment of the disclosure.

According to FIG. 5, a UE 5-1 and a serving cell 5-2 may each include an MR 5-3 and 5-5 and an LP-WUR 5-4 and 5-6 as components. The serving cell 5-2 may configure a condition for the UE to start the deep-sleep operation for the UE, and may provide a parameter used for the condition (used for configuring the condition) to the UE (5-7).

Different (distinct) conditions for the UE to enter the deep-sleep mode may be configured according to a state (e.g., an idle/inactive/connected state) of the UE, and the different (distinct) conditions and a set of parameters related to (corresponding to) each condition may be distinguished and configured for the UE.

A signal for configuring the conditions for the UE to enter the deep-sleep mode and a signal providing the parameters related to (corresponding to) the conditions may be a single signal or different signals, and may be a unicast message transmitted to a specific UE, or may be a broadcast message (SSB, MIB, SIB, or paging) transmitted to a plurality of unspecified UEs. Configuration information about the conditions for the UE to enter the deep-sleep mode and the parameters related to (corresponding to) the conditions may be an RRC message (RRC Reconfig/RRC Release, SIB, or MIB), a MAC message including a MAC CE, or a PHY-layer DCI message.

The signal for configuring the conditions for the UE to enter the deep-sleep mode and the signal providing the parameters related to (corresponding to) the conditions may be two different signals, and each of the two different signals may be messages transmitted by different layers or different transmission methods. For example, each of the two different signals may be a unicast message transmitted to a specific UE, or may be a broadcast message (SSB, MIB, SIB, or paging) transmitted to a plurality of unspecified UEs. Configuration information about the conditions for the UE to enter the deep-sleep mode and the parameters related to (corresponding to) the conditions may be an RRC message (RRC Reconfig, SIB, or MIB), a MAC message including a MAC CE, or a PHY-layer DCI message.

According to an embodiment of the disclosure, the UE may receive reference signals (e.g., an SSB and a CSI-RS) from the base station periodically through an MR (NR) or on a configured resource (5-9), and may derive an MR measurement value of a corresponding cell by inputting measured values of the received reference signals to a cell representative value measurement model (5-8).

Similarly, the UE may receive reference signals (e.g., an LP-SS) from the base station periodically through an LP-WUR (LR) or on a configured resource (5-10), and may derive an LP-WUR (LR) measurement value of a corresponding cell by inputting measured values of the received reference signals to the cell representative value measurement model (5-8).

According to an embodiment of the disclosure, the UE may subsequently determine a measurement value that satisfies the condition for the UE to start the deep-sleep operation configured by a network (5-11), and may transition to the deep-sleep mode when determining that the condition is satisfied (5-12).

According to an embodiment of the disclosure, the UE may be a UE in the idle/inactive mode, and the UE in the idle/inactive mode may receive an entry condition 5-7 for transitioning to a deep sleep from the serving cell base station 5-2 via an RRC message (e.g., an RRC release message) before transitioning to the idle/inactive mode.

Further, to determine whether the entry condition for transitioning to the deep-sleep mode is satisfied (5-11), the UE in the idle/inactive mode may compare measurement values of respective cells measured by the MR and the LP-WUR (5-8) with a threshold value included in a signal (e.g., an MIB or SIB signal (a type of 5-7)) broadcast by a cell on which the UE camps.

According to an embodiment of the disclosure, the UE may be a UE in the connected mode, and the UE in the connected mode may receive the entry condition 5-7 for transitioning to the deep sleep from the serving cell base station 5-2 via an RRC message (e.g., an RRC reconfiguration message).

Further, to determine whether the entry condition for transitioning to the deep sleep mode is satisfied (5-11), the UE may compare the measurement values of the respective cells measured by the MR and the LP-WUR (5-8) with a threshold value included in a signal (e.g., an MIB or SIB signal (a type of 5-7)) broadcast by the serving cell.

According to an embodiment of the disclosure, the UE may be configured with at least one (some, a combination, or all) of the following conditions by the base station, and may perform a transition to the deep-sleep mode when determining that the configured condition is satisfied. More specifically, the UE may be configured to transition to the deep-sleep mode when it is determined that both Event A1 of LR (condition 2 [2.] illustrated below) and Low Mobility of MR (condition 3 [3.] illustrated below) are satisfied, and may be configured with a threshold value for determining each of the conditions or receive the threshold value through an additional signal (e.g., an SIB transmitted by the network) and then determine whether to transition to the deep-sleep mode, based on a configuration (5-11).

### 1. Event A1 of MR (Serving MR becomes better than threshold)

The UE may compare a threshold value transmitted (included in and transmitted) via the signal 5-7 (MIB, SIB, RRC reconfiguration, RRC release, MAC-CE, or DCI) by the base station with a measurement value of the serving cell, and may transition to the deep-sleep mode when the MR measurement value of the serving cell is greater than the threshold value. A UE operation according to condition 1 may be configured/defined as below in Table 1.

**[Table 1]**

| | | |
|---|---|---|
| | The UE shall: | |
| | 1> consider the entering condition for this event to be satisfied when condition A1-1, as specified below, is fulfilled; | |
| | 1> consider the leaving condition for this event to be satisfied when condition A1-2, as specified below, is fulfilled; | |
| | 1> for this measurement, consider the NR serving cell corresponding to the | |
| | associated *measObjectNR* associated with this event. | |
| | Inequality A1-1 (Entering condition) | |
| | *Ms - Hys > Thresh* | |
| | Inequality A1-2 (Leaving condition) | |
| | *Ms + Hys < Thresh* | |
| | The variables in the formula are defined as follows: | |
| | | ***Ms*** is the measurement result of the serving cell, not taking into account any offsets. |
| | | ***Hys*** is the hysteresis parameter for this event (i.e. *hysteresis* as defined within *reportConfigNR* for this event). |
| | | ***Thresh*** is the threshold parameter for this event (i.e. *al-Threshold* as defined within *reportConfigNR* for this event). |
| | | ***Ms*** is expressed in dBm in case of RSRP, or in dB in case of RSRQ and RS-SINR. |
| | | ***Hys*** is expressed in dB. |
| ***Thresh*** is expressed in the same unit as ***Ms**.* | | |

Event A1 illustrated above may be interchangeable with a condition of comparing one threshold with a cell measurement value as below in Table 2 and Table 3.

**[Table 2]**

| |
|---|
| The UE having good cell quality is fulfilled when: |
| - Srxlev > S_{SearchThresholdP} |
| Where: |
| - Srxlev = current Srxlev value of the serving cell (dB). |

**[Table 3]**

| | |
|---|---|
| | The UE having good cell quality is fulfilled when: |
| | - Squal > S_{Search ThresholdQ} |
| | Where: |
| - Squal = current Squal value of the serving cell (dB). | |

Event A1 illustrated above may be interchangeable with a condition of comparing two thresholds and two cell measurement values as below in Table 4.

**[Table 4]**

| | | |
|---|---|---|
| | The UE not at cell edge is fulfilled when: | |
| | | - Srxlev > S_{SearchThresholdP}, and, |
| | | - Squal > SsearchThresholdQ, if S_{SearchThresholdQ} is configured, |
| | Where: | |
| | | - Srxlev = current Srxlev value of the serving cell (dB). |
| - Squal = current Squal value of the serving cell (dB). | | |

### 2. Event A1 of LR (Serving LR becomes better than threshold)

The UE may compare a threshold value transmitted (included in and transmitted) via the signal 5-7 (MIB, SIB, RRC reconfiguration, RRC release, MAC-CE, or DCI) by the base station with a measurement value of the serving cell, and may transition to the deep-sleep mode when the LR measurement value of the serving cell is greater than the threshold value. A UE operation according to condition 2 may be configured/defined as below in Table 5.

**[Table 5]**

| | |
|---|---|
| The UE shall: | |
| 1> consider the entering condition for this event to be satisfied when condition A1-1, as specified below, is fulfilled; | |
| 1> consider the leaving condition for this event to be satisfied when condition A1-2, as specified below, is fulfilled; | |
| 1> for this measurement, consider the NR serving cell corresponding to the associated *measObjectNR* associated with this event. | |
| Inequality A1-1 (Entering condition) | |
| *Ms - Hys > Thresh* | |
| Inequality A1-2 (Leaving condition) | |
| *Ms + Hys < Thresh* | |
| The variables in the formula are defined as follows: | |
| | ***Ms*** is the measurement result of the serving cell, not taking into account any offsets. |
| | ***Hys*** is the hysteresis parameter for this event (i.e. *hysteresis* as defined within *reportConfigNR* for this event). |
| | ***Thresh*** is the threshold parameter for this event (i.e. *al-Threshold* as defined within *reportConfigNR* for this event). |
| | ***Ms*** is expressed in dBm in case of RSRP, or in dB in case of RSRQ and RS-SINR. |
| | ***Hys*** is expressed in dB. |
| | ***Thresh*** is expressed in the same unit as ***Ms.*** |

Event A1 illustrated above may be interchangeable with a condition of comparing one threshold with a cell measurement value as below in Table 6 and Table 7.

**[Table 6]**

| | |
|---|---|
| | The UE having good cell quality is fulfilled when: |
| | - Srxlev > S_{SearchThresholdP} |
| | Where: |
| - Srxlev = current Srxlev value of the serving cell (dB). | |

**[Table 7]**

| | |
|---|---|
| | The UE having good cell quality is fulfilled when: |
| | - Squal > S_{Search ThresholdQ} |
| | Where: |
| - Squal = current Squal value of the serving cell (dB). | |

Event A1 illustrated above may be interchangeable with a condition of comparing two thresholds and two cell measurement values as below in Table 8.

**[Table 8]**

| | | |
|---|---|---|
| | The UE not at cell edge is fulfilled when: | |
| | | - Srxlev > S_{SearchThresholdP}, and, |
| | | - Squal > SsearchThresholdQ, if S_{SearchThresholdQ} is configured, |
| | Where: | |
| | | - Srxlev = current Srxlev value of the serving cell (dB). |
| - Squal = current Squal value of the serving cell (dB). | | |

### 3. Low Mobility of MR (Serving MR measurement indicates the UE has low mobility)

The UE may periodically measure an MR reference signal of the serving cell, may compare a reference value (Srxlev_{Ref}) and a current measurement value (Srxlev) updated according to a condition below in Table 9 with an MR threshold value (S_{SearchDeltaP}) transmitted (included in and transmitted) via the signal 5-7 (MIB, SIB, RRC reconfiguration, RRC release, MAC-CE, or DCI) by the base station, and may transition to the deep-sleep mode when the condition in Table 9 is satisfied. A UE operation according to condition 3 may be configured/defined as below in Table 9.

**[Table 9]**

| | | |
|---|---|---|
| | The UE with low mobility is fulfilled when: | |
| | | - (Srxlev_{Ref} - Srxlev) < S_{SearchDeltaP}, |
| | Where: | |
| | | - Srxlev = current Srxlev value of the serving cell (dB). |
| | | - Srxlev_{Ref} = reference Srxlev value of the serving cell (dB), set as follows: |
| | | - After selecting or reselecting a new cell, or |
| | | - If (Srxlev - Srxlev_{Ref}) > 0, or |
| | | - If the relaxed measurement criterion has not been met for T_{SearchDeltaP}: |
| - The UE shall set the value of Srxlev_{Ref} to the current Srxlev value of the serving cell. | | |

### 4. Low Mobility of LR (Serving LR measurement indicates the UE has low mobility)

The UE may periodically measure an LR reference signal of the serving cell, may compare a reference value (Srxlev_{Ref}) and a current measurement value (Srxlev) updated according to a condition below in Table 10 with an LR threshold value (S_{SearchDeltaP}) transmitted (included in and transmitted) via the signal 5-7 (MIB, SIB, RRC reconfiguration, RRC release, MAC-CE, or DCI) by the base station, and may transition to the deep-sleep mode when the condition in Table 10 is satisfied. A UE operation according to condition 4 may be configured/defined as below in Table 10.

**[Table 10]**

| | | |
|---|---|---|
| | The UE with low mobility is fulfilled when: | |
| | | - (Srxlev_{Ref} - Srxlev) < S_{SearchDeltaP}, |
| | Where: | |
| | | - Srxlev = current Srxlev value of the serving cell (dB). |
| | | - Srxlev_{Ref} = reference Srxlev value of the serving cell (dB), set as follows: |
| | | - After selecting or reselecting a new cell, or |
| | | - If (Srxlev - Srxlev_{Ref}) > 0, or |
| | | - If the relaxed measurement criterion has not been met for T_{SearchDeltaP}: |
| - The UE shall set the value of Srxlev_{Ref} to the current Srxlev value of the serving cell. | | |

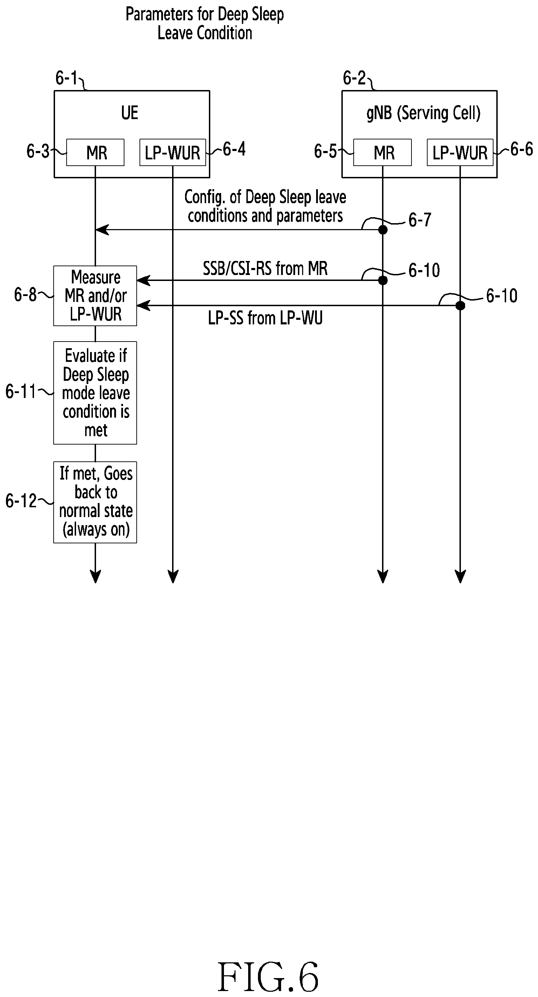

FIG. 6 is a diagram illustrating an example in which a UE is configured to with a condition for exiting from a deep-sleep mode, terminates a deep-sleep operation according to the condition, and performs an operation of turning on an MR back to an always-on state according to an embodiment of the disclosure.

Referring to FIG. 6, a UE 6-1 and a serving cell 6-2 may each include an MR 6-3 and 6-5 and an LP-WUR 6-4 and 6-6 as components. The serving cell 6-2 may configure a condition for the UE to terminate the deep-sleep operation, to wake up the MR again, and to start an always-on operation for the UE, and may provide a parameter used for the condition (used for configuring the condition) to the UE (6-7).

Different (distinct) conditions for the UE to terminate the deep-sleep mode may be configured according to a state (e.g., an idle/inactive/connected state) of the UE, and the different (distinct) conditions and a set of parameters related to (corresponding to) each condition may be distinguished and configured for the UE.

A signal for configuring the conditions for the UE to terminate the deep-sleep mode and a signal providing the parameters related to (corresponding to) the conditions may be a single signal or different signals, and may be a unicast message transmitted to a specific UE, or may be a broadcast message (SSB, MIB, SIB, or paging) transmitted to a plurality of unspecified UEs. Configuration information about the conditions for the UE to enter the deep-sleep mode and the parameters related to (corresponding to) the conditions may be an RRC message (RRC Reconfig/RRC Release, SIB, or MIB), a MAC message including a MAC CE, or a PHY-layer DCI message.

The signal for configuring the conditions for the UE to terminate the deep-sleep mode and the signal providing the parameters related to (corresponding to) the conditions may be two different signals, and each of the two different signals may be messages transmitted by different layers or different transmission methods. For example, each of the two different signals may be a unicast message transmitted to a specific UE, or may be a broadcast message (SSB, MIB, SIB, or paging) transmitted to a plurality of unspecified UEs. Configuration information about the conditions for the UE to enter the deep-sleep mode and the parameters related to (corresponding to) the conditions may be an RRC message (RRC Reconfig, SIB, or MIB), a MAC message including a MAC CE, or a PHY-layer DCI message.

According to an embodiment of the disclosure, the UE may receive reference signals (e.g., an SSB and a CSI-RS) from the base station periodically through an MR (NR) or on a configured resource (6-9), and may derive an MR measurement value of a corresponding cell by inputting measured values of the received reference signals to a cell representative value measurement model (6-8).

Similarly, the UE may receive reference signals (e.g., an LP-SS) from the base station periodically through an LP-WUR (LR) or on a configured resource (6-10), and may derive an LP-WUR (LR) measurement value of a corresponding cell by inputting measured values of the received reference signals to the cell representative value measurement model (6-8).

According to an embodiment of the disclosure, the UE may subsequently determine a measurement value that satisfies the condition for the UE to terminate the deep-sleep operation configured by a network (6-11), and may terminate the deep-sleep mode and change the MR to the always-on mode when determining that the condition is satisfied (6-12).

According to an embodiment of the disclosure, the UE may be a UE in the idle/inactive mode, and the UE in the idle/inactive mode may receive an entry condition 6-7 for transitioning from a deep sleep to a normal mode from the serving cell base station 6-2 via an RRC message (e.g., an RRC release message) before transitioning to the idle/inactive mode.

Further, to determine whether the entry condition for transitioning from the deep sleep to the normal mode is satisfied (6-11), the UE in the idle/inactive mode may compare measurement values of respective cells measured by the MR and the LP-WUR (6-8) with a threshold value included in a signal (e.g., an MIB or SIB signal (a type of 6-7)) broadcast by a cell on which the UE camps.

According to an embodiment of the disclosure, the UE may be a UE in the connected mode, and the UE in the connected mode may receive the entry condition 6-7 for transitioning from the deep sleep to the normal mode from the serving cell base station 6-2 via an RRC message (e.g., an RRC reconfiguration message).

Further, to determine whether the entry condition for transitioning from the deep sleep to the normal mode is satisfied (6-11), the UE may compare the measurement values of the respective cells measured by the MR and the LP-WUR (6-8) with a threshold value included in a signal (e.g., an MIB or SIB signal (a type of 6-7)) broadcast by the serving cell.

According to an embodiment of the disclosure, the UE may be configured with at least one (some, a combination, or all) of the following conditions by the base station, and may perform a transition from the deep sleep to the normal mode when determining that the configured condition is satisfied. More specifically, the UE may be configured to transition from the deep-sleep mode to the normal mode when it is determined that both Event A2 of LR (condition 2 [2.] illustrated below) and Not Low Mobility of MR (condition 3 [3.] illustrated below) are satisfied, and may be configured with a threshold value for determining each of the conditions or receive the threshold value through an additional signal (e.g., an SIB transmitted by the network) and then determine whether to transition from the deep-sleep mode to the normal mode, based on a configuration (6-11).

### 1. Event A2 of MR (Serving MR becomes worse than threshold)

According to an embodiment of the disclosure, the UE may compare a threshold value transmitted (included in and transmitted) via the signal 6-7 (MIB, SIB, RRC reconfiguration, RRC release, MAC-CE, or DCI) by the base station with a measurement value of the serving cell, and may transition from the deep sleep to the normal mode when the MR measurement value of the serving cell is smaller than the threshold value. A UE operation according to condition 1 may be configured/defined as below in Table 11.

**[Table 11]**

| | |
|---|---|
| The UE shall: | |
| | 1> consider the entering condition for this event to be satisfied when condition A2-1, as specified below, is fulfilled; |
| | 1> consider the leaving condition for this event to be satisfied when condition A2-2, as specified below, is fulfilled; |
| | 1> for this measurement, consider the serving cell indicated by the *measObjectNR* associated to this event. |
| | Inequality A2-1 (Entering condition) |
| | *Ms + Hys < Thresh* |
| | Inequality A2-2 (Leaving condition) |
| | *Ms - Hys > Thresh* |
| | The variables in the formula are defined as follows: |
| | ***Ms*** is the measurement result of the serving cell, not taking into account any offsets. |
| | ***Hys*** is the hysteresis parameter for this event (i.e. *hysteresis* as defined within *reportConfigNR* for this event). |
| | ***Thresh*** is the threshold parameter for this event (i.e. *a2-Threshold* as defined within *reportConfigNR* for this event). |
| | ***Ms*** is expressed in dBm in case of RSRP, or in dB in case of RSRQ and RS-SINR. |
| | ***Hys*** is expressed in dB. |
| ***Thresh*** is expressed in the same unit as ***Ms.*** | |

Event A2 illustrated above may be interchangeable with a condition of comparing one threshold with a cell measurement value as below in Table 12 and Table 13.

**[Table 12]**

| | |
|---|---|
| | The UE having bad cell quality is fulfilled when: |
| | - Srxlev < S_{SearchThresholdP} |
| | Where: |
| - Srxlev = current Srxlev value of the serving cell (dB). | |

**[Table 13]**

| | |
|---|---|
| | The UE having bad cell quality is fulfilled when: |
| | - Squal < S_{SearchThresholdQ} |
| | Where: |
| - Squal = current Squal value of the serving cell (dB). | |

Event A2 illustrated above may be interchangeable with a condition of comparing two thresholds and two cell measurement values as below in Table 14.

**[Table 14]**

| | | |
|---|---|---|
| | The UE at cell edge is fulfilled when: | |
| | | - Srxlev < S_{SearchThresholdP}, and, |
| | | - Squal < S_{SearchThresholdQ}, if S_{SearchThresholdQ} is configured, |
| | Where: | |
| | | - Srxlev = current Srxlev value of the serving cell (dB). |
| - Squal = current Squal value of the serving cell (dB). | | |

### 2. Event A2 of LR (Serving LR becomes worse than threshold)

According to an embodiment of the disclosure, the UE may compare a threshold value transmitted (included in and transmitted) via the signal 6-7 (MIB, SIB, RRC reconfiguration, RRC release, MAC-CE, or DCI) by the base station with a measurement value of the serving cell, and may transition from the deep sleep to the normal mode when the LR measurement value of the serving cell is smaller than the threshold value. A UE operation according to condition 2 may be configured/defined as below in Table 15.

**[Table 15]**

| | |
|---|---|
| | **The UE shall:** |
| | 1> consider the entering condition for this event to be satisfied when condition A2-1, as specified below, is fulfilled; |
| | 1> consider the leaving condition for this event to be satisfied when condition A2-2, as specified below, is fulfilled; |
| | 1> for this measurement, consider the serving cell indicated by the *measObjectNR* associated to this event. |
| | Inequality A2-1 (Entering condition) |
| | *Ms + Hys < Thresh* |
| | Inequality A2-2 (Leaving condition) |
| | *Ms - Hys > Thresh* |
| | The variables in the formula are defined as follows: |
| | ***Ms*** is the measurement result of the serving cell, not taking into account any offsets. |
| | ***Hys*** is the hysteresis parameter for this event (i.e. *hysteresis* as defined within *reportConfigNR* for this event). |
| | ***Thresh*** is the threshold parameter for this event (i.e. *a2-Threshold* as defined within *reportConfigNR* for this event). |
| | ***Ms*** is expressed in dBm in case of RSRP, or in dB in case of RSRQ and RS-SINR. |
| | ***Hys*** is expressed in dB. |
| ***Thresh*** is expressed in the same unit as ***Ms.*** | |

### 3. Not Low Mobility of MR (Serving MR measurement indicates the UE is not in a low mobility)

According to an embodiment of the disclosure, the UE may periodically measure an MR reference signal of the serving cell, may compare a reference value (Srxlev_{Ref}) and a current measurement value (Srxlev) updated according to a condition below in Table 16 with an MR threshold value (S_{SearchDeltaP}) transmitted (included in and transmitted) via the signal 6-7 (MIB, SIB, RRC reconfiguration, RRC release, MAC-CE, or DCI) by the base station, and may transition from the deep-sleep mode to the normal mode when the condition in Table 16 is satisfied. A UE operation according to condition 3 may be configured/defined as below in Table 16.

**[Table 16]**

| | | |
|---|---|---|
| | The UE with low mobility is fulfilled when: | |
| | | - (Srxlev_{Ref} - Srxlev) > S_{SearchDeltaP}, |
| | Where: | |
| | | - Srxlev = current Srxlev value of the serving cell (dB). |
| | | - Srxlev_{Ref} = reference Srxlev value of the serving cell (dB), set as follows: |
| | | - After selecting or reselecting a new cell, or |
| | | - If (Srxlev - Srxlev_{Ref}) > 0, or |
| | | - If the relaxed measurement criterion has not been met for T_{SearchDeltaP}: |
| - The UE shall set the value of Srxlev_{Ref} to the current Srxlev value of the serving cell. | | |

### 4. Not Low Mobility of LR (Serving LR measurement indicates the UE is not in a low mobility)

According to an embodiment of the disclosure, the UE may periodically measure an LR reference signal of the serving cell, may compare a reference value (Srxlev_{Ref}) and a current measurement value (Srxlev) updated according to a condition below in Table 17 with an LR threshold value (S_{SearchDeltaP}) transmitted (included in and transmitted) via the signal 6-7 (MIB, SIB, RRC reconfiguration, RRC release, MAC-CE, or DCI) by the base station, and may transition from the deep-sleep mode to the normal mode when the condition in Table 17 is satisfied. A UE operation according to condition 4 may be configured/defined as below in Table 17.

**[Table 17]**

| | |
|---|---|
| The UE with low mobility is fulfilled when: | |
| | - (Srxlev_{Ref} - Srxlev) > S_{SearchDeltaP}, |
| Where: | |
| | - Srxlev = current Srxlev value of the serving cell (dB). |
| | - Srxlev_{Ref} = reference Srxlev value of the serving cell (dB), set as follows: |
| | - After selecting or reselecting a new cell, or |
| | - If (Srxlev - Srxlev_{Ref}) > 0, or |
| | - If the relaxed measurement criterion has not been met for T_{SearchDeltaP}: |
| - The UE shall set the value of Srxlev_{Ref} to the current Srxlev value of the serving cell. | |

In a case where measurement of the MR is infeasible due to the UE operating in the deep-sleep mode or in a case where measurement of the LR is infeasible due to a sudden movement of the UE or channel variations, when measurement of one radio access technology (RAT) (e.g., one or more of the MR or the LR) is infeasible, the UE may perform determination as follows.
- (Determination 1) Even though the UE is configured by the serving cell to exit from a deep sleep by comprehensively considering measurement results and evaluation results from different RATs, when there is an unavailable RAT, the UE may exit from a deep sleep by considering only measurement of an available RAT. More specifically, even though the UE is configured to exit from a deep sleep only when both an MR measurement result and an LR measurement result of a camped cell are not good, when measurement of the MR is infeasible due to the MR of the UE is currently in the sleep mode, the UE may exit from a deep sleep by comparing only the LR measurement result with an LR threshold value.
- (Determination 2) When a configured condition does not match the type of an RAT capable of being measured, the UE may immediately exit from a deep sleep. More specifically, when the UE is configured to exit from a deep sleep when the LR is a specific threshold value or less but measurement of the LR is impossible or difficult, the UE may immediately exit from a deep sleep.
- Operations according to determination 1 and/or determination 2 may be available to the UE when the UE receives a signal including an indicator that allows the UE to perform the operations from the base station (6-7).

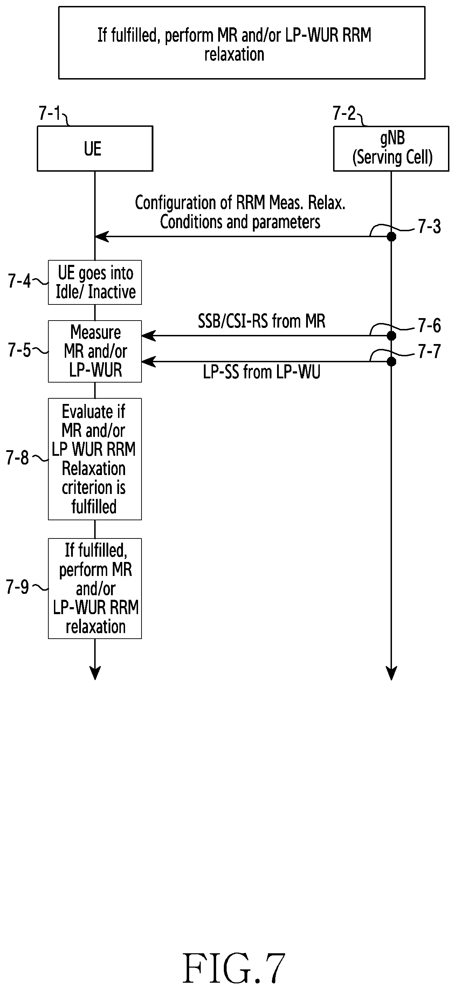

FIG. 7 is a diagram illustrating an example in which a UE performs signal transmission and reception and RRM measurement relaxation when operating in an idle/inactive mode according to an embodiment of the disclosure.

Specifically, a UE of FIG. 7 may be a UE including an LP-WUR, and signal transmission and reception and RRM measurement relaxation performed by the UE in an idle/inactive mode described in FIG. 7 may be an operation performed to save power by relaxing RRM measurement of the MR or LP-WUR.

Referring to FIG. 7, a serving cell 7-2 may configure a condition for the UE 7-1 to start an operation of relaxing RRM measurement, and may provide a parameter to be used for the condition (used for configuring the condition) to the UE (7-3).

According to an embodiment of the disclosure, RRM measurement relaxation or an RRM measurement relaxation operation may refer to an operation of extending periodicity of RRM reference signal measurement for each RAT, which the UE periodically performs, by several times compared to existing periodicity. The RRM reference signal measurement for each RAT may be performed to periodically update measurement values of different cells that change over time due to the location of the UE or the like. In addition, the RRM measurement relaxation or the RRM measurement relaxation operation may be an effective operation for UE power saving by allowing the UE to skip RRM for a specific RAT, thus not only reducing power consumed by the UE for signal measurement but also enabling the UE to operate in the sleep mode for a longer time.

According to an embodiment of the disclosure, the UE may transition to the idle or inactive mode when a condition is satisfied (7-4).

According to an embodiment of the disclosure, the UE operating in the idle/inactive mode may be in a state of camping on a cell with highest performance, and may measure an MR SSB 7-6 and an LP-WUR LP-SS 7-7 transmitted by the cell with the highest performance and neighboring cells (7-5).

According to an embodiment of the disclosure, the UE may apply threshold values included in a signal 7-3 preconfigured by the base station or a broadcast signal (e.g., an SIB) to the condition for performing RRM measurement relaxation included in the configured signal 7-3, and may apply a value 7-5 obtained by measuring the MR SSB and LP-WUR LP-SS of the cells thereto, thereby determining whether the condition for performing RRM measurement relaxation is satisfied (7-8).

When the condition for performing RRM measurement relaxation is satisfied, the UE may perform RRM measurement relaxation for an RAT for which the condition for performing RRM measurement relaxation is satisfied (7-9).

According to an embodiment of the disclosure, the UE may be configured with at least one (some, a combination, or all) of the following conditions by the base station, and may perform RRM measurement relaxation for an RAT for which the configured condition is satisfied. More specifically, the UE may be configured to perform MR RRM measurement relaxation when it is determined that Low Mobility of MR (condition 3 [3.] illustrated below) is satisfied, and may be configured with a threshold value for determining each of the conditions or receive the threshold value through an additional signal (e.g., an SIB transmitted by the network) (7-3) and then determine whether to perform RRM measurement relaxation, based on a configuration (7-8).

As illustrated in FIG. 7, to determine whether to perform MR-based RRM measurement relaxation, whether a condition (1 and/or 3 illustrated below) for using a signal for MR-based measurement and/or a condition (2 and/or 4 illustrated below) for using a signal for LR-based measurement area satisfied may be considered. More specifically, to determine whether to perform MR-based RRM measurement relaxation, the condition (1 and/or 3 illustrated below) for using the signal for MR- based measurement may be used, and when it is determined that the condition for using the signal for MR-based measurement is satisfied, MR-based RRM measurement relaxation may be performed. Further, to determine whether to perform MR-based RRM measurement relaxation, the condition (2 and/or 4 illustrated below) for using the signal for LR-based measurement may be used, and when it is determined that the condition for using the signal for LR-based measurement is satisfied, MR-based RRM measurement relaxation may be performed. In addition, to determine whether to perform MR-based RRM measurement relaxation, both the condition (1 and/or 3 illustrated below) for using the signal for MR-based measurement and the condition (2 and/or 4 illustrated below) for using the signal for LR-based measurement may be used, and when it is determined that both the condition for using the signal for MR-based measurement and the condition for using the signal for LR-based measurement are satisfied, MR-based RRM measurement relaxation may be performed. Furthermore, to determine whether to perform MR-based RRM measurement relaxation, both the condition (1 and/or 3 illustrated below) for using the signal for MR-based measurement and the condition (2 and/or 4 illustrated below) for using the signal for LR-based measurement may be used, and when it is determined that any one of the condition for using the signal for MR-based measurement and the condition for using the signal for LR-based measurement is satisfied, MR-based RRM measurement relaxation may be performed.

As illustrated in FIG. 7, to determine whether to perform LR-based RRM measurement relaxation, whether a condition (1 and/or 3 illustrated below) for using a signal for MR-based measurement and/or a condition (2 and/or 4 illustrated below) for using a signal for LR-based measurement area satisfied may be considered. More specifically, to determine whether to perform LR-based RRM measurement relaxation, the condition (1 and/or 3 illustrated below) for using the signal for MR-based measurement may be used, and when it is determined that the condition for using the signal for MR-based measurement is satisfied, LR-based RRM measurement relaxation may be performed. Further, to determine whether to perform LR-based RRM measurement relaxation, the condition (2 and/or 4 illustrated below) for using the signal for LR-based measurement may be used, and when it is determined that the condition for using the signal for LR-based measurement is satisfied, LR-based RRM measurement relaxation may be performed. In addition, to determine whether to perform LR-based RRM measurement relaxation, both the condition (1 and/or 3 illustrated below) for using the signal for MR-based measurement and the condition (2 and/or 4 illustrated below) for using the signal for LR-based measurement may be used, and when it is determined that both the condition for using the signal for MR-based measurement and the condition for using the signal for LR-based measurement are satisfied, LR-based RRM measurement relaxation may be performed. Furthermore, to determine whether to perform LR-based RRM measurement relaxation, both the condition (1 and/or 3 illustrated below) for using the signal for MR-based measurement and the condition (2 and/or 4 illustrated below) for using the signal for LR-based measurement may be used, and when it is determined that any one of the condition for using the signal for MR-based measurement and the condition for using the signal for LR-based measurement is satisfied, LR-based RRM measurement relaxation may be performed.

### 1. Low Mobility of MR (Serving MR measurement indicates the UE has low mobility)

According to an embodiment of the disclosure, the UE may periodically measure an MR reference signal of the serving cell, may compare a reference value (Srxlev_{Ref}) and a current measurement value (Srxlev) updated according to a condition below in Table 18 with an MR threshold value (S_{SearchDeltaP}) transmitted (included in and transmitted) via the signal 7-3 (MIB, SIB, RRC reconfiguration, RRC release, MAC-CE, or DCI) by the base station, and may perform MR RRM measurement relaxation when the condition in Table 18 is satisfied. A UE operation according to condition 1 may be configured/defined as below in Table 18.

**[Table 18]**

| | | |
|---|---|---|
| | The UE with low mobility is fulfilled when: | |
| | | - (Srxlev_{Ref} - Srxlev) < S_{SearchDeltaP}, |
| | Where: | |
| | | - Srxlev = current Srxlev value of the serving cell (dB). |
| | | - Srxlev_{Ref} = reference Srxlev value of the serving cell (dB), set as follows: |
| | | - After selecting or reselecting a new cell, or |
| | | - If (Srxlev - Srxlev_{Ref}) > 0, or |
| | | - If the relaxed measurement criterion has not been met for T_{SearchDeltaP}: |
| - The UE shall set the value of Srxlev_{Ref} to the current Srxlev value of the serving cell. | | |

### 2. Low Mobility of LR (Serving LR measurement indicates the UE has low mobility)

According to an embodiment of the disclosure, the UE may periodically measure an LR reference signal of the serving cell, may compare a reference value (Srxlev_{Ref}) and a current measurement value (Srxlev) updated according to a condition below in Table 19 with an LR threshold value (S_{SearchDeltaP}) transmitted (included in and transmitted) via the signal 7-3 (MIB, SIB, RRC reconfiguration, RRC release, MAC-CE, or DCI) by the base station, and may perform LR RRM measurement relaxation when the condition in Table 19 is satisfied. A UE operation according to condition 2 may be configured/defined as below in Table 19.

**[Table 19]**

| | | |
|---|---|---|
| | | The UE with low mobility is fulfilled when: |
| | | - (Srxlev_{Ref} - Srxlev) < S_{SearchDeltaP}, |
| | Where: | |
| | | - Srxlev = current Srxlev value of the serving cell (dB). |
| | | - Srxlev_{Ref} = reference Srxlev value of the serving cell (dB), set as follows: |
| | | - After selecting or reselecting a new cell, or |
| | | - If (Srxlev - Srxlev_{Ref}) > 0, or |
| | | - If the relaxed measurement criterion has not been met for T_{SearchDeltaP}: |
| - The UE shall set the value of Srxlev_{Ref} to the current Srxlev value of the serving cell. | | |

### 3. Not-at-cell-edge of MR

According to an embodiment of the disclosure, the UE may periodically measure an MR reference signal of the serving cell, may compare a current measurement value (Srxlev, Squal) updated according to a condition below in Table 20 with an MR threshold value (S_{SearchThresholdP}, S_{SearchThresholdQ}) transmitted (included in and transmitted) via the signal 7-3 (MIB, SIB, RRC reconfiguration, RRC release, MAC-CE, or DCI) by the base station, and may perform MR RRM measurement relaxation when the condition in Table 20 is satisfied. A UE operation according to condition 3 may be configured/defined as below in Table 20.

**[Table 20]**

| | | |
|---|---|---|
| | The relaxed measurement criterion for UE not at cell edge is fulfilled when: | |
| | | - Srxlev > S_{SearchThresholdP}, and, |
| | | - Squal > S_{SearchThresholdQ}, if S_{SearchThresholdQ} is configured, |
| | Where: | |
| | | - Srxlev = current Srxlev value of the serving cell (dB). |
| - Squal = current Squal value of the serving cell (dB). | | |

### 4. Not-at-cell-edge of LR

According to an embodiment of the disclosure, the UE may periodically measure an LR reference signal of the serving cell, may compare a current measurement value (Srxlev, Squal) updated according to a condition below in Table 21 with an LR threshold value (S_{SearchThresholdP}, S_{SearchThresholdQ}) transmitted (included in and transmitted) via the signal 7-3 (MIB, SIB, RRC reconfiguration, RRC release, MAC-CE, or DCI) by the base station, and may perform LR RRM measurement relaxation when the condition in Table 21 is satisfied. A UE operation according to condition 4 may be configured/defined as below in Table 21.

**[Table 21]**

| | | |
|---|---|---|
| | The relaxed measurement criterion for UE not at cell edge is fulfilled when: | |
| | | - Srxlev > S_{SearchThresholdP}, and, |
| | | - Squal > SsearchThresholdQ, if S_{SearchThresholdQ} is configured, |
| | Where: | |
| | | - Srxlev = current Srxlev value of the serving cell (dB). |
| - Squal = current Squal value of the serving cell (dB). | | |

### 1. Event A1 of MR (Serving MR becomes better than threshold)

According to an embodiment of the disclosure, the UE may compare a threshold value transmitted (included in and transmitted) via the signal 7-3 (MIB, SIB, RRC reconfiguration, RRC release, MAC-CE, or DCI) by the base station with a measurement value of the serving cell, and may perform MR RRM measurement relaxation when the MR measurement value of the serving cell is determined to be greater than the threshold value. A UE operation according to condition 1 may be configured/defined as below in Table 22.

**[Table 22]**

| | |
|---|---|
| The UE shall: | |
| 1> consider the entering condition for this event to be satisfied when condition A1-1, as specified below, is fulfilled; | |
| 1> consider the leaving condition for this event to be satisfied when condition A1-2, as specified below, is fulfilled; | |
| 1> for this measurement, consider the NR serving cell corresponding to the associated *measObjectNR* associated with this event. | |
| Inequality A1-1 (Entering condition) | |
| *Ms - Hys > Thresh* | |
| Inequality A1-2 (Leaving condition) | |
| *Ms + Hys < Thresh* | |
| The variables in the formula are defined as follows: | |
| | ***Ms*** is the measurement result of the serving cell, not taking into account any offsets. |
| | ***Hys*** is the hysteresis parameter for this event (i.e. *hysteresis* as defined within *reportConfigNR* for this event). |
| | ***Thresh*** is the threshold parameter for this event (i.e. *al-Threshold* as defined within *reportConfigNR* for this event). |
| | ***Ms*** is expressed in dBm in case of RSRP, or in dB in case of RSRQ and RS-SINR. |
| | ***Hys*** is expressed in dB. |
| ***Thresh*** is expressed in the same unit as ***Ms.*** | |

Event A1 may be interchangeable with a condition of comparing one threshold with a cell measurement value as below in Table 23 and Table 24.

**[Table 23]**

| | |
|---|---|
| | The UE having good cell quality is fulfilled when: |
| | - Srxlev > S_{SearchThresholdP} |
| | Where: |
| - Srxlev = current Srxlev value of the serving cell (dB). | |

**[Table 24]**

| | |
|---|---|
| The UE having good cell quality is fulfilled when: | |
| - Squal > S_{Search ThresholdQ} | |
| Where: | |
| | - Squal = current Squal value of the serving cell (dB). |

Event A1 may be interchangeable with a condition of comparing two thresholds and two cell measurement values as below in Table 25.

**[Table 25]**

| | | |
|---|---|---|
| | The UE not at cell edge is fulfilled when: | |
| | | - Srxlev > S_{SearchThresholdP}, and, |
| | | - Squal > S_{searchThresholdQ}, if S_{SearchThresholdQ} is configured, |
| | Where: | |
| | | - Srxlev = current Srxlev value of the serving cell (dB). |
| - Squal = current Squal value of the serving cell (dB). | | |

### 2. Event A1 of LR (Serving LR becomes better than threshold)

According to an embodiment of the disclosure, the UE may compare a threshold value transmitted (included in and transmitted) via the signal 7-3 (MIB, SIB, RRC reconfiguration, RRC release, MAC-CE, or DCI) by the base station with a measurement value of the serving cell, and may perform LR RRM measurement relaxation when the LR measurement value of the serving cell is determined to be greater than the threshold value. A UE operation according to condition 2 may be configured/defined as below in Table 22.

**[Table 26]**

| |
|---|
| The UE shall: |
| 1> consider the entering condition for this event to be satisfied when condition A1-1, as specified below, is fulfilled; |
| 1> consider the leaving condition for this event to be satisfied when condition A1-2, as specified below, is fulfilled; |
| 1> for this measurement, consider the NR serving cell corresponding to the associated *measObjectNR* associated with this event. |
| Inequality A1-1 (Entering condition) |
| *Ms - Hys > Thresh* |
| Inequality A1-2 (Leaving condition) |
| *Ms + Hys < Thresh* |
| The variables in the formula are defined as follows: |
| ***Ms*** is the measurement result of the serving cell, not taking into account any offsets. |
| ***Hys*** is the hysteresis parameter for this event (i.e. *hysteresis* as defined within *reportConfigNR* for this event). |
| ***Thresh*** is the threshold parameter for this event (i.e. *al-Threshold* as defined within *reportConfigNR* for this event). |
| ***Ms*** is expressed in dBm in case of RSRP, or in dB in case of RSRQ and RS-SINR. |
| ***Hys*** is expressed in dB. |
| ***Thresh*** is expressed in the same unit as ***Ms**.* |

Event A1 may be interchangeable with a condition of comparing one threshold with a cell measurement value as below.

**[Table 27]**

| | |
|---|---|
| | The UE having good cell quality is fulfilled when: |
| | - Srxlev > S_{SearchThresholdP} |
| | Where: |
| - Srxlev = current Srxlev value of the serving cell (dB). | |

**[Table 28]**

| | |
|---|---|
| The UE having good cell quality is fulfilled when: | |
| - Squal > S_{Search ThresholdQ} | |
| Where: | |
| | - Squal = current Squal value of the serving cell (dB). |

Event A1 may be interchangeable with a condition of comparing two thresholds and two cell measurement values as below.

**[Table 29]**

| | | |
|---|---|---|
| | The UE not at cell edge is fulfilled when: | |
| | | - Srxlev > S_{SearchThresholdP}, and, |
| | | - Squal > S_{SearchThresholdQ}, if S_{SearchThresholdQ} is configured, |
| | Where: | |
| | | - Srxlev = current Srxlev value of the serving cell (dB). |
| - Squal = current Squal value of the serving cell (dB). | | |

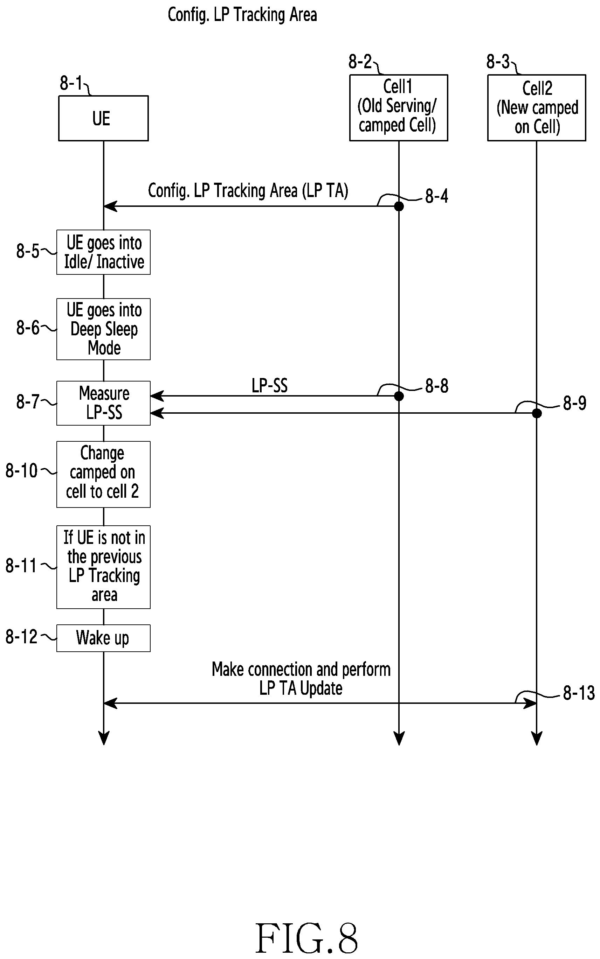

FIG. 8 is a diagram illustrating an example in which a UE including an LP-WUR is configured with an LP-WUR tracking area or LP tracking area (LP-TA), allowing the UE to move while maintaining a deep-sleep mode during an idle/inactive-mode operation, and performs an operation based thereon according to an embodiment of the disclosure.

Referring to FIG. 8, a UE 8-1 may receive a signal including configuration information about an LP tracking area from a serving base station 8-2 in a connected mode (8-4). When a condition is satisfied, the UE may transition to the idle/inactive mode (8-5). When it is determined that the conditions described with reference to FIG. 5 are satisfied, the UE having transitioned to the idle/inactive mode may transition to the deep-sleep mode (8-6), and may operate the MR of the UE entirely or partially in a power saving mode to reduce power consumption. In addition, the UE may move while maintaining the deep-sleep mode. To determine mobility of the UE capable of moving while maintaining the deep-sleep mode, the UE may receive LP-SSs transmitted by not only a cell on which the UE camps but also neighboring cells (8-8 and 8-9), and may derive a measurement value of each cell through the same (8-7).

Here, when the UE discovers a cell 8-3 having a better condition than the current camped-on cell, the UE may perform cell reselection by changing the camped-on cell to the corresponding cell (8-10).

According to an embodiment of the disclosure, when the UE determines that the UE has left coverage of the previous LP-TA that is configured via the LP tracking area configuration signal 8-4 and includes the previous camped-on cell due to cell reselection, UE mobility, or performance degradation of the serving cell (8-11), the UE may wake up from the deep-sleep mode (8-12) to attempt to reconnect to a new candidate cell, and may perform a tracking update to notify a network that the LP-TA has been changed (8-13).

When the UE performs cell reselection to change the camped-on cell (8-10), the UE may need to receive an SIB, for example, an SIB1 signal, which transmits system information including the foregoing information broadcast by each cell and then find a suitable cell in order to find a cell satisfying various conditions, such as a service to be used by the UE and a PLMN to which the UE belongs.

However, for a UE unable to receive the information through an MR in the deep-sleep state, the disclosure illustrates a method in which a network provides a UE in advance, through an LP-TA, with a cell list that enables the UE to select a cell without receiving SIB information when the UE performs cell reselection.

By providing a cell list that enables a UE to select a cell without receiving SIB information when performing cell reselection, the UE does not need to wake up an MR to receive an SIB in cell reselection after moving between cells in a TA, and may thus perform cell reselection while maintaining the deep-sleep mode of the MR. In addition, the UE may be configured to recognize that the UE is able to perform cell reselection while maintaining the deep-sleep mode of the MR.

To configure the UE to recognize that the UE is able to perform cell reselection while maintaining the deep-sleep mode of the MR, the base station 8-2 may include an indicator allowing the UE to recognize that the UE may be configured to recognize that the UE is able to perform cell reselection while maintaining the deep-sleep mode of the MR in the LP-TA configuration signal 8-4 for the UE.

The LP-TA configuration signal 8-4 transmitted by the base station to the UE may include at least one (some or all) of the following pieces of information.
- List of LP-TA configurations expressed as a bundle of the following information
- Delimiter ID for distinguishing an LP-TA
- List of cell IDs for distinguishing cells belonging to an LP-TA
- LP-ID list of each cell included in an LP-SS that each cell transmits to distinguish cells belonging to an LP-TA
- Indicator indicating that the UE does not need SIB reception for cell reselection within an LP-TA
- Indicator indicating that the UE is able to perform cell reselection while maintaining deep sleep within an LP-TA

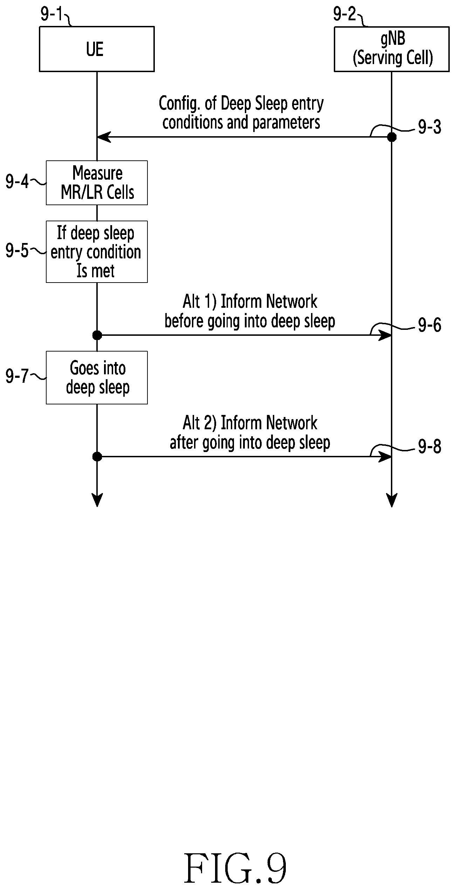

FIG. 9 is a diagram illustrating an example of a method in which a UE including an LP-WUR provides information to a base station before or after transitioning to a deep-sleep mode according to an embodiment of the disclosure.

Referring to FIG. 9, a serving cell 9-2 may configure a condition for starting a deep-sleep operation for a UE 9-1, and may provide a parameter used for the condition (used for configuring the condition) (9-3).

Different (distinct) conditions for the UE 9-1 to start the deep-sleep operation may be configured according to a state (e.g., an idle/inactive/connected state) of the UE, and the different (distinct) conditions and a set of parameters related to (corresponding to) each condition may be distinguished and configured for the UE.

A signal for configuring the conditions for the UE 9-1 to start the deep-sleep operation and a signal providing the parameters related to (corresponding to) the conditions may be a single signal or different signals, and may be a unicast message transmitted to a specific UE, or may be a broadcast message (SSB, MIB, SIB, or paging) transmitted to a plurality of unspecified UEs. Configuration information about the conditions for the UE 9-1 to start the deep-sleep operation and the parameters related to (corresponding to) the conditions may be an RRC message (RRC Reconfig/RRC Release, SIB, or MIB), a MAC message including a MAC CE, or a PHY-layer DCI message.

The signal for configuring the conditions for the UE 9-1 to start the deep-sleep operation and the signal providing the parameters related to (corresponding to) the conditions may be two different signals, and each of the two different signals may be messages transmitted by different layers or different transmission methods. For example, each of the two different signals may be a unicast message transmitted to a specific UE, or may be a broadcast message (SSB, MIB, SIB, or paging) transmitted to a plurality of unspecified UEs. Configuration information about the conditions for the UE 9-1 to start the deep-sleep operation and the parameters related to (corresponding to) the conditions may be an RRC message (RRC Reconfig, SIB, or MIB), a MAC message including a MAC CE, or a PHY-layer DCI message.

According to an embodiment of the disclosure, the UE may receive reference signals (e.g., an SSB and a CSI-RS) from the base station periodically through an MR (NR) or on a configured resource, and may derive an MR measurement value of a corresponding cell by inputting measured values of the received reference signals to a cell representative value measurement model (9-4).

Similarly, the UE may receive reference signals (e.g., an LP-SS) from the base station periodically through an LP-WUR (LR) or on a configured resource, and may derive an LP-WUR (LR) measurement value of a corresponding cell by inputting measured values of the received reference signals to the cell representative value measurement model (9-4).

According to an embodiment of the disclosure, the UE may subsequently determine a measurement value that satisfies the condition for the UE to start the deep-sleep operation configured by a network (9-5), and may transition to the deep-sleep mode when determining that the condition is satisfied (9-7).

According to an embodiment of the disclosure, the UE may be a UE in the idle/inactive mode, and the UE in the idle/inactive mode may receive an entry condition 9-3 for transitioning to a deep sleep from the serving cell base station 9-2 via an RRC message, for example, an RRC release message, before transitioning to the idle/inactive mode.

Further, to determine whether the entry condition for transitioning to the deep-sleep mode is satisfied (9-5), the UE in the idle/inactive mode may compare measurement values of respective cells measured by the MR and the LP-WUR with a threshold value included in a signal (e.g., an MIB or SIB signal) 9-3 broadcast by a cell on which the UE camps.

According to an embodiment of the disclosure, in a case where the UE transitions to the deep-sleep mode, when the network does not know corresponding information (e.g., information about the UE transitioning to the deep-sleep mode) and the network needs to transmit paging to reestablish connection to the UE, the network is unable to know whether the UE is operating in the deep-sleep mode, and thus the network needs to perform both paging using the LP-WUR and paging using the MR for the UE.

To solve the problem that the network needs to perform both paging using the LP-WUR and paging using the MR for the UE because the network is unable to know whether the UE is operating in the deep-sleep mode, the UE may inform the network of a situation in which the UE transitions the deep-sleep mode before (9-6) or after (9-8) transitioning to the deep-sleep mode.

A message for the UE to inform the network of the situation in which the UE transitions to the deep-sleep mode may include at least one (all or some) of the following pieces of information.
- UE ID (one or both of an MR ID and an LR ID)
- Indicator indicating transition to deep sleep
- Transition time information (current time or scheduled time, or a timer)
- Cause value of transition (selectable from pre-shared information in a bitmap format)

A report message 9-6 before the transition to the deep sleep transmitted by the UE may be uplink transmission information transmitted by the UE through the MR, and may be an RRC message, a MAC message including a MAC CE, or a PHY-layer DCI message.

Alternatively, the report message 9-6 before the transition to the deep sleep transmitted by the UE may be uplink transmission information transmitted by the UE through the LP-WUR, and may be an RRC message, a MAC message including a MAC CE, a PHY-layer DCI message, or a message transmitted via a signal of any other RAT, for example, an on-off keying signal.

A report message 9-8 after the transition to the deep sleep transmitted by the UE may be uplink transmission information transmitted by the UE through the LP-WUR, and may be an RRC message, a MAC message including a MAC CE, or a PHY-layer DCI message, or a message transmitted via a signal of any other RAT, for example, an on-off keying signal.

In the foregoing embodiments, an inequality sign may be interchangeable with an inequality sign including an equality sign. For example, an equality sign ">" may be interchangeable with an inequality sign including an equality sign ">=."

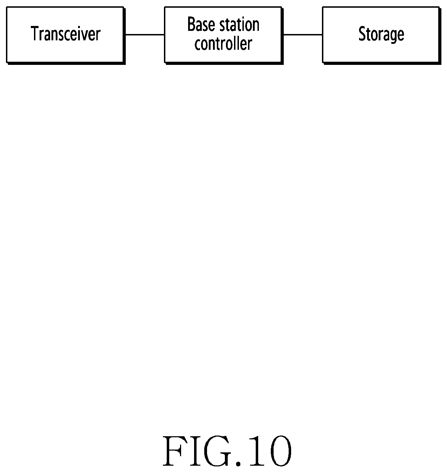

FIG. 10 illustrates a structure of a base station according to an embodiment of the disclosure.

Referring to FIG. 10, the base station may include a transceiver, a controller, and a storage. The transceiver, the controller, and the storage may be operated according to the above-described communication methods of the base station. In addition, a network device may also correspond to the structure of the base station. However, components of the base station are not limited to the above-described example. For example, the base station may include a larger or smaller number of components than the above-described components. For example, the base station may include the transceiver and the controller. Furthermore, the transceiver, the controller, and the storage may be implemented in the form of a single chip.

The transceiver refers to a base station receiver and a base station transmitter as a whole, and may transmit/receive signals with UEs, other base stations, or other network devices. The transmitted/received signals may include control information and data. The transceiver may transmit, for example, system information, synchronization signals, or reference signals to UEs. To this end, the transceiver may include an RF transmitter configured to up-convert and amplify the frequency of transmitted signals, an RF receiver configured to low-noise-amplify received signals and down-convert the frequency thereof, and the like. However, this is only an embodiment of the transceiver, and the components of the transceiver are not limited to the RF transmitter and the RF receiver. The transceiver may include wired/wireless transceivers, and may include various components for transmitting/receiving signals. In addition, the transceiver may receive signals through a communication channel (e.g., a radio channel), output the same to the controller, and transmit signals output from the controller through the communication channel. Furthermore, the transceiver may receive communication signals, output same to a processor, and transmit signals output from the processor to UEs, other base stations, or other network entities through a wired/wireless network.

The storage may store programs and data necessary for operations of the base station. In addition, the storage may store control information or data included in signals acquired by the base station. The storage may include storage media such as a ROM, a RAM, a hard disk, a CD-ROM, and a DVD, or a combination of storage media. In addition, the storage may store at least one of information transmitted/received through the transceiver and information generated through the controller.

As used herein, the controller may be defined as a circuit, an application specific integrated circuit, or at least one processor. The processor may include a communication processor (CP) which performs control for communication and an application processor (AP) which controls upper layers such as application programs. The controller may control the overall operation of the base station according to the embodiments proposed in the disclosure. For example, the controller may control signal flows between the respective blocks to perform operations according to the above-described flowcharts.

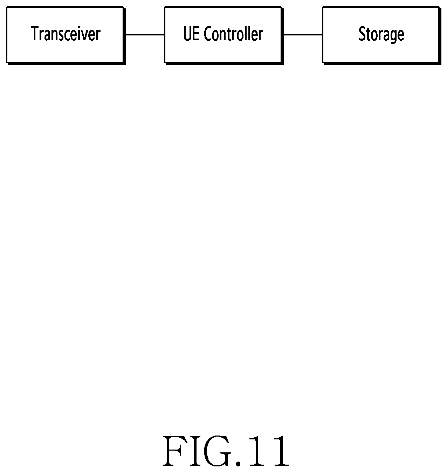

FIG. 11 illustrates a structure of a UE according to an embodiment of the disclosure.

Referring to FIG. 11, the UE may include a transceiver, a controller, and a storage. The transceiver, the controller, and the storage may be operated according to the above-described communication methods of the UE. Components of the UE are not limited to the above-described example. For example, the UE may include a larger or smaller number of components than the above-described components. For example, the UE may include the transceiver and the controller. Furthermore, the transceiver, the controller, and the storage may be implemented in the form of a single chip.

The transceiver refers to a UE receiver and a UE transmitter as a whole, and may transmit/receive signals with base stations, other UEs, or network entities. The signals transmitted/received with base stations may include control information and data. The transceiver may receive, for example, system information, synchronization signals, or reference signals from base stations. To this end, the transceiver may include an RF transmitter configured to up-convert and amplify the frequency of transmitted signals, an RF receiver configured to low-noise-amplify received signals and down-convert the frequency thereof, and the like. However, this is only an embodiment of the transceiver, and the components of the transceiver are not limited to the RF transmitter and the RF receiver. Also, the transceiver may include wired/wireless transceivers, and may include various components for transmitting/receiving signals. In addition, the transceiver may receive signals through a radio channel, output the same to the controller, and transmit signals output from the controller through the radio channel. Furthermore, the transceiver may receive communication signals, output same to a processor, and transmit signals output from the processor to network entities through a wired/wireless network.

The storage may store programs and data necessary for operations of the UE. In addition, the storage may store control information or data included in a signal acquired by the UE. The storage may include storage media such as a ROM, a RAM, a hard disk, a CD-ROM, and a DVD, or a combination of storage media.

As used herein, the controller may be defined as a circuit, an application specific integrated circuit, or at least one processor. The processor may include a communication processor (CP) which performs control for communication and an application processor (AP) which controls upper layers such as application programs. The controller may control the overall operation of the UE according to the embodiments proposed in the disclosure. For example, the controller may control signal flows between the respective blocks to perform operations according to the above-described flowcharts.

Methods disclosed in the claims or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a device for performing an embodiment of the disclosure.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

## Claims

1. A method performed by a terminal in a wireless communication system, the method comprising:
receiving configuration information related to a condition for starting radio resource management (RRM) measurement relaxation from a base station, the configuration comprising a first condition for starting main radio (MR) measurement relaxation and a second condition for starting low power radio (LR) measurement relaxation; and
receiving a reference signal related to MR-based measurement and a reference signal related to LR-based measurement from the base station,
wherein the MR measurement relaxation is started when the first condition is satisfied, and
wherein the first condition comprises a condition in which a measurement result based on the reference signal related to the LR-based measurement is used, or comprises the condition in which the measurement result based on the reference signal related to the LR-based measurement is used and a condition in which a measurement result based on the reference signal related to the MR-based measurement is used.

2. The method of claim 1, wherein the LR measurement relaxation is started when the second condition is satisfied, and
wherein the second condition comprises a condition in which a measurement result based on the reference signal related to the MR-based measurement is used, or comprises a condition in which a measurement result based on the reference signal related to the LR-based measurement is used and the condition in which the measurement result based on the reference signal related to the MR-based measurement is used.

3. The method of claim 2, wherein the condition in which the measurement result based on the reference signal related to the LR-based measurement is used and the condition in which the measurement result based on the reference signal related to the MR-based measurement is used comprise a mobility condition for determining whether the terminal has low mobility and an in-cell coverage location condition for determining whether the terminal is located in a position other than a cell boundary within cell coverage, and
wherein a first parameter for determining the mobility condition and the in-cell coverage location condition included in the condition in which the measurement result based on the reference signal related to the LR-based measurement is used and a second parameter for determining the mobility condition and the in-cell coverage location condition included in the condition in which the measurement result based on the reference signal related to the MR-based measurement is used are configured separately.

4. The method of claim 2, wherein the MR measurement relaxation and the LR measurement relaxation are applied to a serving cell and a neighboring cell.

5. A method performed by a base station in a wireless communication system, the method comprising:
transmitting configuration information related to a condition for starting radio resource management (RRM) measurement relaxation to a terminal, the configuration comprising a first condition for starting main radio (MR) measurement relaxation and a second condition for starting low power radio (LR) measurement relaxation; and
transmitting a reference signal related to MR-based measurement and a reference signal related to LR-based measurement to the terminal,
wherein the MR measurement relaxation is started when the first condition is satisfied, and
wherein the first condition comprises a condition in which a measurement result based on the reference signal related to the LR-based measurement is used, or comprises the condition in which the measurement result based on the reference signal related to the LR-based measurement is used and a condition in which a measurement result based on the reference signal related to the MR-based measurement is used.

6. The method of claim 5, wherein the LR measurement relaxation is started when the second condition is satisfied, and
wherein the second condition comprises a condition in which a measurement result based on the reference signal related to the MR-based measurement is used, or comprises a condition in which a measurement result based on the reference signal related to the LR-based measurement is used and the condition in which the measurement result based on the reference signal related to the MR-based measurement is used.

7. The method of claim 6, wherein the condition in which the measurement result based on the reference signal related to the LR-based measurement is used and the condition in which the measurement result based on the reference signal related to the MR-based measurement is used comprise a mobility condition for determining whether the terminal has low mobility and an in-cell coverage location condition for determining whether the terminal is located in a position other than a cell boundary within cell coverage, and
wherein a first parameter for determining the mobility condition and the in-cell coverage location condition included in the condition in which the measurement result based on the reference signal related to the LR-based measurement is used and a second parameter for determining the mobility condition and the in-cell coverage location condition included in the condition in which the measurement result based on the reference signal related to the MR-based measurement is used are configured separately.

8. The method of claim 6, wherein the MR measurement relaxation and the LR measurement relaxation are applied to a serving cell and a neighboring cell.

9. A terminal in a wireless communication system, the terminal comprising:
a transceiver; and
a controller connected to the transceiver,
wherein the controller is configured to:
receive configuration information related to a condition for starting radio resource management (RRM) measurement relaxation from a base station, the configuration comprising a first condition for starting main radio (MR) measurement relaxation and a second condition for starting low power radio (LR) measurement relaxation; and
receive a reference signal related to MR-based measurement and a reference signal related to LR-based measurement from the base station,
wherein the MR measurement relaxation is started when the first condition is satisfied, and
wherein the first condition comprises a condition in which a measurement result based on the reference signal related to the LR-based measurement is used, or comprises the condition in which the measurement result based on the reference signal related to the LR-based measurement is used and a condition in which a measurement result based on the reference signal related to the MR-based measurement is used.

10. The terminal of claim 9, wherein the LR measurement relaxation is started when the second condition is satisfied, and
wherein the second condition comprises a condition in which a measurement result based on the reference signal related to the MR-based measurement is used, or comprises a condition in which a measurement result based on the reference signal related to the LR-based measurement is used and the condition in which the measurement result based on the reference signal related to the MR-based measurement is used.

11. The terminal of claim 10, wherein the condition in which the measurement result based on the reference signal related to the LR-based measurement is used and the condition in which the measurement result based on the reference signal related to the MR-based measurement is used comprise a mobility condition for determining whether the terminal has low mobility and an in-cell coverage location condition for determining whether the terminal is located in a position other than a cell boundary within cell coverage, and
wherein a first parameter for determining the mobility condition and the in-cell coverage location condition included in the condition in which the measurement result based on the reference signal related to the LR-based measurement is used and a second parameter for determining the mobility condition and the in-cell coverage location condition included in the condition in which the measurement result based on the reference signal related to the MR-based measurement is used are configured separately.

12. The terminal of claim 10, wherein the MR measurement relaxation and the LR measurement relaxation are applied to a serving cell and a neighboring cell.

13. A base station in a wireless communication system, the base station comprising:
a transceiver; and
a controller connected to the transceiver,
wherein the controller is configured to:
transmit configuration information related to a condition for starting radio resource management (RRM) measurement relaxation to a terminal, the configuration comprising a first condition for starting main radio (MR) measurement relaxation and a second condition for starting low power radio (LR) measurement relaxation; and
transmit a reference signal related to MR-based measurement and a reference signal related to LR-based measurement to the terminal,
wherein the MR measurement relaxation is started when the first condition is satisfied, and
wherein the first condition comprises a condition in which a measurement result based on the reference signal related to the LR-based measurement is used, or comprises the condition in which the measurement result based on the reference signal related to the LR-based measurement is used and a condition in which a measurement result based on the reference signal related to the MR-based measurement is used.

14. The base station of claim 13, wherein the LR measurement relaxation is started when the second condition is satisfied, and
wherein the second condition comprises a condition in which a measurement result based on the reference signal related to the MR-based measurement is used, or comprises a condition in which a measurement result based on the reference signal related to the LR-based measurement is used and the condition in which the measurement result based on the reference signal related to the MR-based measurement is used.

15. The base station of claim 14, wherein the condition in which the measurement result based on the reference signal related to the LR-based measurement is used and the condition in which the measurement result based on the reference signal related to the MR-based measurement is used comprise a mobility condition for determining whether the terminal has low mobility and an in-cell coverage location condition for determining whether the terminal is located in a position other than a cell boundary within cell coverage, and
wherein a first parameter for determining the mobility condition and the in-cell coverage location condition included in the condition in which the measurement result based on the reference signal related to the LR-based measurement is used and a second parameter for determining the mobility condition and the in-cell coverage location condition included in the condition in which the measurement result based on the reference signal related to the MR-based measurement is used are configured separately.
